# EUROPEAN PATENT APPLICATION

(11) **EP 3 026 518 A1**
(43) Date of publication of application: **01.06.2016**
(21) Application number: 14003966.0
(22) Date of filing: 25.11.2014
(51) Int. Cl.: G05B 23/02

(54) **Method for Root analysis of an alarm flood sequence**

(71) Applicant: ABB Technology AG, 8050 Zürich (CH)
(72) Inventor: Hollender, Martin, 69221 Dossenheim (DE); Chioua, Moncef, 69115 Heidelberg (DE); Hoernicke, Mario, 76829 Landau (DE); Marco, Vecent Rodrigo, Valencia (ES)
(74) Representative: Eickmeyer, Dietmar

(57) **Abstract**

The invention is related to a method for Root analysis of an alarm flood sequence, comprising the following steps:
• Providing a flood of alarms in raw alarm sequences,
• Removing chattering alarms from the raw alarm sequences,
• Identifying the alarm flood time intervals and alarm flood sequences,
• Grouping alarm flood sequences according to their similarity using a suitable metric,
• Mapping alarms to process signals and assets in a process and instrumentation diagram,
• Isolate root cause using the collected process data and a suitable process connectivity analysis.

## Description

The invention is related to a Method for Root analysis of an alarm flood sequence using a combination of readily available process information namely the process topology, the process measurements and the historical process alarm logs.

The introduction of distributed control systems in the process industry has increased the number of alarms per operator exponentially. Modern plants present a high level of interconnectivity due to steam recirculation, heat integration and the complex control systems installed in the plant. When there is a disturbance in the plant it spreads through its material, energy and information connections affecting the process variables on the path. The alarms associated to these process variables are triggered.

The alarm messages may overload the operator in the control room, who will not be able to properly investigate each one of these alarms. This undesired situation is called an *alarm flood.* In such situations the operator might not be able to keep the plant within safe operation. The aim of this invention is to reduce alarm flood periods in process plants. Consequential alarms coming from the same process abnormality are isolated and a causal alarm suggestion is given. The causal alarm in an alarm flood is the alarm associated to the asset originating the disturbance that caused the flood.

Multiple information sources are used: an alarm log containing all past alarms messages, process data and a topology model of the plant. The alarm flood reduction is achieved with a combination of alarm log analysis, process data root-cause analysis and connectivity analysis. The research findings are implemented in a software tool that guides the user through the different steps of the method. Finally the applicability of the method is proved with an industrial case study.

### Alarm systems

An alarm system is the main element that interfaces in modern plants with the operator to the plants. It is a crucial element since it monitors the plant operation and alerts the operator when some undesired state that requires his assessment or action is reached. Its main objectives are: to assist the operator to correct potentially dangerous situations before the emergency shutdown system is triggered, to avoid loss by identifying deviations from the optimal operating conditions and to help the operator to better understand the process conditions that gave rise to the upset.

An alarm is a signal sent to the operators in order to draw their attention during an abnormal situation in the plant. An alarm occurrence comes usually together with a sound, flashing light and an indicator. In addition, alarms usually present a message with some information about the problem.

Ideally, for each abnormal situation just one alarm is raised. However, operators usually receive a large amount of alarms in practice. Most of these alarms are either false alarms, i.e. alarms that alert of an abnormal situation when there is none, or nuisance alarms, i.e. alarms that are redundant, since other alarms have already informed of the abnormality.

Traditionally an alarm in a process plant is associated to a process variable going out of its normal range.

These types of alarms are called absolute alarms. However, one should bear in mind that many other alarm detection mechanisms are used in practice, and not all alarms are strictly associated to a process signal. Some of these mechanisms are listed below:
- bit-pattern alarms
- discrepancy alarms
- calculated alarms
- recipe-of-change alarms
- statistical alarms
- adaptive alarms
- ...

In the past, alarms systems consisted of lamps and horns individually connected to the process. Since setting an alarm with under those conditions required high effort and the space in the control room was limited, every alarm was well thought through.

With the digital revolution, the introduction of Distributed Control Systems (DCS) in the industry together with the reduction of the price of computer hardware, the situation changed. An alarm nowadays is listed in a scrollable table or on graphics, therefore there is no space limitation. Besides, adding a new alarm to the alarm system is as easy as writing some code lines or clicking on the proper options. There is no need of connection planning, no need of wiring, just typing. Thus an effort is practically non-existent. As a result, the number of configured alarms per operator has increased exponentially in the last decades due to an abuse of the use of alarms.

On the other hand, the increasing number of process variables present in monitoring systems as a result of the technological evolution in the past decades has brought many benefits: higher product quality, improved emissions control, and higher productivity among others. New control algorithms have been developed to increase the efficiency of plants. Control algorithms have become more complex and more process variables are needed in the control loops. In addition to this, due to the progress in sensor technology, a wider variety of process variables are now accessible. However, each process variable brings along at least four alarms which overloads the alarm system and makes the supervision of the process more complex.

Furthermore, modern plants are highly interconnected due to steam recirculation, heat integration and complex control approaches to increase the efficiency of the plant. A single disturbance spreads fast through the plant due to these material, energy and information connections triggering the alarm messages connected to process signals in the path.

All of these elements lead to the regularity of the situation where the operator in the control room is overloaded with a large amount of alarms. The operator cannot take the time to properly analyze each alarm, which may cause critical alarms to be ignored (e.g. acknowledged alarms not being properly investigated and corrected). Missing a critical alarm translates into material losses, endangers the integrity of the plant or even puts human life at risk.

It is meant to be used for identifying consequential alarm sequences, and isolating the root cause alarm in the identified consequential alarm sequence. Root cause alarms can be different from first-up alarms and cannot be directly inferred from the alarm time stamps.

Alarms and events become crucial for the operation of today's highly integrated complex process and manufacturing plant. Alarms are used to indicate to the operator occurrences of faulty and dangerous states of the process that need to be identified in order to react accordingly and steer the process back into a normal state.

Once the process control system has been commissioned and is operating the plant, it displays alarms according to the rules implemented in the process control environment. Since many items in the plant are able to generate alarms that are displayed in the common manner to the operator, it can be the case that a single cause leads to several alarms originating from different process items.

Those alarms can propagate very quickly through the process and might lead to episodes of high alarm rates commonly called "alarm floods" in the process and power generation industry. Often, only the root cause alarm is of importance, since this alarm might inform about the actual reason for the occurrence of an abnormal situation. Alarm floods have been a contributing factor to several industrial accidents (e.g. Milford Haven 1994) and industry guidelines like ISA 18.2 recommend limiting alarm rates to a maximum of 10 alarms in 10 minutes intervals.

Alarms are time-stamped in order to indicate their order of occurrence and to inform the operator which alarm occurred first.

Three main reasons can hinder isolating the root cause of an abnormal situation when relying on alarm time-stamps:
*First,* the alarm time stamp can be imprecise for example because of the following reasons:
   - Fieldbuses or Modbus might add a time stamp very late and imprecise (e.g. +/-4 seconds)
   - Alarms might originate in different subsystems with clocks that are not synchronized
   - Cycle times inside the controllers cause imprecision
*Second,* the time of occurrence of an alarm is tightly related to the setting of its limit and therefore, the choice of the alarm limits can influences their order of occurrence in a given consequential alarm sequence.
*Third,* for a given choice of an alarm limit, the rate of change of the associated process measurement i.e. the sub-process dynamics can as well influence the time of occurrence of an alarm and therefore its order of occurrence in a given consequential alarm sequence.

This invention introduces a new approach to find root cause alarms that is relatively independent of the precision of the time stamp. It uses knowledge extracted from the process topology and the process measurements.

Based on the analysis of process measurements associated to process alarms, the correlation of alarms can be deduced from the similarity of the corresponding measurements. Additionally, the order of alarm occurrences can be "corrected" by evaluating the causal relations existing between the corresponding process measurements. Hence, this method can be treated as being time stamp independent.

In a final step, based the process topology i.e. on the process material, energy or information flows, the dependencies and relationship between alarms and measurements generated by different equipment in the process can be validated.

Based on this state of the art it is objective of the proposed approach to provide a method for reducing alarm floods in process plants by grouping consequential alarms originating from the same cause and to give a suggestion of the "causal" alarm.

### New approach

The problem of the invention is solved by a Method for Root analysis of an alarm flood sequence, comprising the following steps:
- Providing a flood of alarms in raw alarm sequences,
- Removing chattering alarms from the raw alarm sequences,
- Identifying the alarm flood time intervals and alarm flood sequences,
- Grouping alarm flood sequences according to their similarity using a suitable metric,
- Mapping alarms to process signals and assets in a process and instrumentation diagram,
- Isolate root cause using the collected process data and a suitable process connectivity analysis.

The proposed approach relies on two assumptions:
- Alarm floods are the result of an abnormality propagating in the process through material, energy or control connections.
- If two alarm flood sequences are similar enough, then they originate from the same source.

The method consists of five basic steps:
(1) Removing chattering alarms from the raw alarm sequences,
(2) Identifying the alarm flood time intervals and alarm flood sequences,
(3) Grouping alarm flood sequences according to their similarity using a suitable metric,
(4) Mapping alarms to process signals and assets in a process and instrumentation diagram,
(5) Isolate root cause using the collected process data and a suitable process connectivity analysis.

The first three steps correspond to the alarm log analysis stage. In the first step chattering alarms will be removed from the alarm log. In the second step, alarm flood time periods are isolated and alarm flood sequences are constructed. In the third step, similarity indices between sequences are computed and the alarm sequences are clustered according to them. Each cluster represents a process abnormality and the alarm sequences in the cluster are the periods where the abnormality occurred. The forth step of the method sets the connection between the alarm, the process signals and assets' tag names. Finally, on the fifth step a precedence analysis is performed to isolate the "causal" alarm in the alarm flood sequence.

### Step 1: Remove Chattering alarms

In industrial process alarm management systems of industrial processes there usually exists a large amount of nuisance alarms. The most common type of "nuisance alarms" are the so called "chattering and repetitive" alarms. Chattering alarms are defined by the industrial standard ISA-18.2 (2009) as alarms that "repeatedly transition between the alarm state and the normal state in a short period of time". About 10 to 60% of the alarm occurrences are due to chattering and repetitive alarms. The most common causes of chattering alarms are:
- The presence of noise in the process measurements.
- The process variable corresponding to the alarm is operating at a critical value very close to the alarm limit.

If chattering alarms are not removed prior to the alarm flood analysis, we may find time intervals with a large amount of alarms where most of the alarm occurrences are chattering alarms.

In the ISA 18.2 it is not specified whether chattering alarms should be included within the 10 alarms per 10 minutes threshold that defines an alarm flood. However, since the present work focuses on analyzing consequential alarms, chattering alarms are removed before proceeding with the analysis. The alarm analysis focuses on alarm floods involving consequential alarm sequences.

In order to remove chattering alarms, a period of time will be defined and if the time between two alarm occurrences of the same type is lower than the chosen interval, the second alarm occurrence will be removed. The interval length chosen for this thesis is 10 min, based on the definition of alarm flood.

A table with two columns is created. In the first column all alarm types are listed and in the second the time stamps of the last alarm occurrence of the corresponding type that has not been removed are saved. Each alarm occurrence in the alarm log is analyzed. First, if its alarm type has not been encountered yet, its time stamp is saved in the second column in the row corresponding to its alarm type. If the alarm type of the alarm occurrence that is being analyzed has already been encountered and if the difference in time between its time stamp and the time stamp saved in the table is smaller than 10 min, the alarm occurrence is removed. Otherwise the time stamp of that alarm type in the table is substituted by the alarm stamp of the current occurrence, and the alarm occurrence is not erased from the alarm log.

### Step 2: Identification of alarm flood periods

Once chattering alarm occurrences are filtered out, the next step is to isolate those time-periods where alarm floods occur and construct the corresponding alarm flood sequences.

The alarm log is divided into intervals of 10 min. And those intervals with more alarm occurrences than a specified threshold are highlighted. The threshold will be chosen taking into account that an alarm flood is defined as more than 10 alarms per 10 min and operator. In process plants one can find alarm floods that take few minutes and others that last several hours. In order to identify an alarm floods regardless of its duration consecutive intervals with more alarm occurrences than the specified threshold are merged.

Since the alarm log is discretized, it can occur that the beginning or the end of an alarm flood sequence is cut out. For instance, considering a threshold equal to 10, an alarm flood sequence consisting of 20 alarms triggering within 10 min could be split apart when the log is divided into intervals of 10 min. The first 5 alarms might be contained in one interval and the other 15 in the following. If just those intervals with more than 10 alarms are considered, the first 5 alarms will not be taken into account, then part of the alarm sequence will be lost. For this study it is very important not to lose part of the sequence neither at the beginning, where the alarm connected to the root-cause of the alarm flood might be, nor at the end, where extra consequential alarms that can influence the alarm sequence clustering in step three.

### Step 3: Grouping alarm flood sequences

Once the alarm flood periods are isolated and the alarm flood sequences are constructed, the next step is to cluster similar respectively group alarm floods sequences.

A similarity index is first computed for each pair of sequences. As stated above, when matching patterns in alarm sequences the proximity in time of the alarms is more important than the exact order of occurrence because of uncertainties. The MSW algorithm for exampletakes into account these uncertainties by blurring the order of those alarms that occur close in time.

The main issue when using the Modified Smith Waterman algorithm is the computation time. The time required to calculate the similarity index between two sequences can be greater than 10 seconds, depending on the sequence length. Computing the similarity index of all possible combinations of alarm flood sequences within an alarm log of half a year can easily take more than a day.

In order to overcome this problem, an initial stage is added where another algorithm that is less precise but less time consuming can be used for pre-filtering. The aim is to filter out those combinations of alarm sequences that have low similarity, so that the MSW index is just calculated for those combinations that are similar "enough".

A similarity matrix is built using these MSW similarity indexes. Later an agglomerative hierarchical clustering algorithm is used to group similar alarm sequences. Given a pair of alarm sequences, these sequences are considered similar if they have a high ratio of alarm types in common. If two alarm sequences have few alarms in common the computation of the MSW similarity index is discarded. These combination pairs can be directly assigned a low similarity index.

A threshold is set for the pre-filter. If the calculated Jaccard distance is greater than the threshold value, this combination will be pre-assigned a high distance value.

For the method described in this work, the pre-filter index is modified due to two reasons. First, as the MSW algorithm calculates a similarity index not a distance index, it is more convenient to use a similarity index for the pre-filter too. Second, as mentioned above, to decide whether a pair of alarm sequences is filtered out or not, a threshold must be set. The pre-filter similarity index chosen makes easier the threshold selection as explained below.

In the Clustering alarm flood sequences step of this method, two thresholds must be set: the pre-filter threshold and the clustering threshold. The first threshold one decides whether a pair of alarm sequences is filtered out or not, the second sets the stopping criteria of the clustering algorithm (i.e. if the maximum similarity between clusters at a certain iteration in the clustering method is lower than the threshold, the algorithm stops). The choice of these threshold values is interrelated: for a specific clustering threshold if the pre-filter threshold is set too high there may be combinations of alarm sequences that have a MSW similarity index big enough for being clustered, but their pre-filter similarity index is too low to pass the pre-filter. To avoid this situation, one possibility could be to set the pre-filter threshold very low. However, in this case, the computational time increases and the benefits of using a pre-filter are lost. An alternative solution is to make the pre-filter and the MSW similarity indexes comparable.

To illustrate this, assume the clustering threshold is set to a value of 0.5 and two alarm sequences have a MSW similarity index of 0.6 (and should therefore be clustered). Setting the pre-filter threshold to a value of 0.5 or lower assures that this pair is not filtered out.

After filtering out the combinations of alarm sequences that are not similar enough, the MSW similarity index is computed for the remaining combinations and a similarity matrix is built. The similarity matrix is a symmetric matrix. It contains the similarity indices for all combinations of alarm sequences. The value of an element in the matrix is the similarity index computed between the alarm sequence and the alarm sequence.

The MSW similarity index of the dismissed combinations is assumed to be a low number (zero was used for the case study). The diagonal entries of the matrix should have a value of one since the similarity index between a sequence with itself is one. However, in order to avoid the clustering algorithm to cluster a sequence with itself the values in the diagonal are forced to be zero.

The clustering method used in this invention is the agglomerative hierarchical clustering. At each iteration the clustering algorithm accesses the similarity matrix to compute the similarities between a new cluster and the rest of the clusters. The output of the algorithm is a set of clusters where each cluster contains similar alarm sequences.

One of the assumptions of this method is that if a group of alarm flood sequences are similar enough, they are originated from the same process abnormality. Hence, we consider each cluster as a representation of a process abnormality. The alarm flood sequences inside each cluster form a training set from which an "alarm print" of the process abnormality can be extracted. For each process abnormality an alarm template containing the representative alarms that identify this process abnormality can be obtained.

It may happen that while the process abnormality described in one of the clusters occur, other alarms that are not associated to the process abnormality are triggered. These alarms should not be included in the fault template. One way of filtering out these alarms is to consider just those alarms that have a high frequency of occurrence in the training set of alarm floods. If an alarm occurs with a high ratio in the different alarm flood sequences of a given cluster, this alarm is included in the template. The percentage used for the industrial case study described in this thesis is set to 50%, i.e. if an alarm is triggered in more than 50% of the sequences belonging to a given cluster, this alarm will be further considered.

The output of this step is a set of templates defining the process abnormality corresponding to each of the alarm flood clusters. The alarms contained in these templates will be the ones considered in the following steps of the method.

### Step 4: Mapping alarms to process signals and assets

In the proposed approach three process information sources are combined: alarm log, process data and plant topology. Even though the sources differ in the nature of the data contained, they are related to each other. Signals usually measure a property of an asset or the product contained in it. For example a signal generated by a pressure indicator informs about the pressure of the gas contained in a tank. On the other hand, alarms can be assigned to signals (limit alarms) and also directly to assets (e.g. a logic alarm indicating a malfunction of a specific asset). This relation between information sources forms the core of the proposed approach. Hence, being able to link alarms, signals and assets is crucial.

There is no universal naming convention for alarm, signal and assets' tags. This hinders a direct mapping between the information sources. In spite of the lack of tagging conventions, it is usually possible to identify the connections between alarms, signals and assets by the similarity of the symbols contained in the tag names.

A way to automatically map the alarm, signals and assets is to use a similarity index as it has been done to cluster alarm flood sequences. However in this case the problem is more simple since there is no time consideration. The selected method to map tags is the original Smith Waterman algorithm.

Given a list of alarm tag names and a list of signal tag names, the similarity index of each combination of strings (formed by signal, alarm or asset names) is computed. With these indexes a similarity matrix is built. Then a similarity threshold is set, 0.5 was the chosen threshold for the industrial case study. Each alarm tag will be mapped to the more similar signal tag if their similarity index is higher than the threshold value. The same procedure is applied for signal and assets tags and for alarm and asset tags.

After this step, the connection between the different information sources is set. The corresponding process and topology data is available to perform root-cause analysis to isolate the alarm associated to the asset where the fault was originated.

### Step 5: Root-cause analysis

In the alarm analysis stage, faults that start alarm floods are identified and characterized. However, the causal alarm cannot be isolated relying on the alarms' time-stamps. The first alarm in time cannot be considered the causal alarm (alarm associated to the root-cause). This is due to the fact that the time at which an alarm triggers is highly dependent on the alarm limit settings. Moreover, the time between abnormalities occurring and the corresponding alarm triggering is not a deterministic variable, but a probabilistic one. This is the reason why in order to identify the first alarm of a fault the process data associated to these alarms is analyzed instead. With the use of process data analysis, the precedence relationships between signals can be captured.

The root-cause analysis is performed for each of the alarm clusters found. The signals associated to the alarms within the fault template are selected for the study. Based on the assumption that alarm flood sequences within the same cluster have the same root-cause, the data-driven analysis just needs to be done for one of the alarm flood periods within each cluster.

The first step for the topology based validation of the data-driven analysis is to identify the assets that correspond to the signals used in the data-driven analysis. These assets will be indicators and controllers. Additionally, the alarm template that is being analyzed there may contain alarms that are not associated to signals but to assets, e.g. alarms indicating a malfunctioning pump. These assets are also automatically included in the topology analysis.

The connectivity of the plant is explored using a graph-search algorithm on the graph capturing the connections between assets in the plant. The depth first search is used for this purpose in the software tool implemented in this thesis. The controllers or indicators suggested as root-causes from PDA are chosen as starting points of the disturbance. The rest of assets selected for the topology analysis are chosen as secondary disturbed elements. Then all feasible paths from the suggested root-cause to each of their secondary disturbed assets are explored. If there are not feasible paths from the root-cause suggestion to several secondary disturbed elements, the root-cause hypothesis is not valid since according to the topology model there is no way that the irregularity in this asset could spread to the other assets.

Once the spurious results of the data-driven analysis have been filtered out and one of the root-cause suggestions has been validated with plant connectivity. The first alarm under which the other alarms within the template will be grouped is the alarm associated to the root-cause asset.

### Plant areas selection

Experimental analysis of industrial alarm records showed the existence of alarm floods caused by alarms notifying controllers put on manual mode or alarm floods reporting malfunctioning ports when an electronic device failed. This kind of alarm floods are out of the scope of this invention since they are not caused by a disturbance or an asset fault propagating through the process via the material, energy or information connections. Finding the first alarm with the presented method would be impossible since there are no signals associated to these alarms.

For some of the plant areas these types of alarm floods are frequent. Filtering out these areas is beneficial mainly for two reasons:

Plant-wide monitoring is a large scale monitoring problems. The alarm management system of these plants usually has several thousands of unique alarms configured to control the process. It is not rare that around ten thousand alarms trigger each month. The computation time needed to calculate all similarity indexes between all alarm flood sequences found in the alarm logs can easily be longer than one day on a single computer. If those plant areas containing alarm floods caused by logical sequences are removed from the analysis, a reduction of the problem complexity can be achieved.

Including plant areas with alarm floods not caused by a disturbance propagating through the plant gives rise to a big portion of alarm clusters that are not in the scope of this method. In this situation, the user has to examine and discard these clusters manually, which would be a tedious and time consuming task.

A solution to identify the "interesting" areas of the plant is to first perform the first three steps of the method (alarm log analysis stage) using as an input just those alarms associated to signals (limit alarms). The reason behind this is that alarm floods due to propagating disturbances have a big proportion of limit alarms. Therefore, if areas of the plant with similar periods of high number of limit alarms are selected, clusters of alarm floods caused by a disturbance propagating through the plant are targeted.

The purpose of the proposed method is to cluster all alarms originating from the same process abnormality under the causal alarm. In order to include in this cluster also alarms that are not associated to signals, the alarm analysis stage is repeated including all alarm occurrences of the selected areas. All consequential alarms are therefore identified independently of their type.

The pre-analysis of the alarm log described in this section reduces the computational time of the similarity matrix and saves the user the tedious task of selecting the appropriate clusters when dealing with large alarm records.

The invention will now be further explained by means of an exemplary embodiment and with reference to the accompanying drawings, in which:
- Figure 1: shows an exemplary workflow of the method according to the invention and
- Figure 2: shows alarm visualization as list and in HMI.

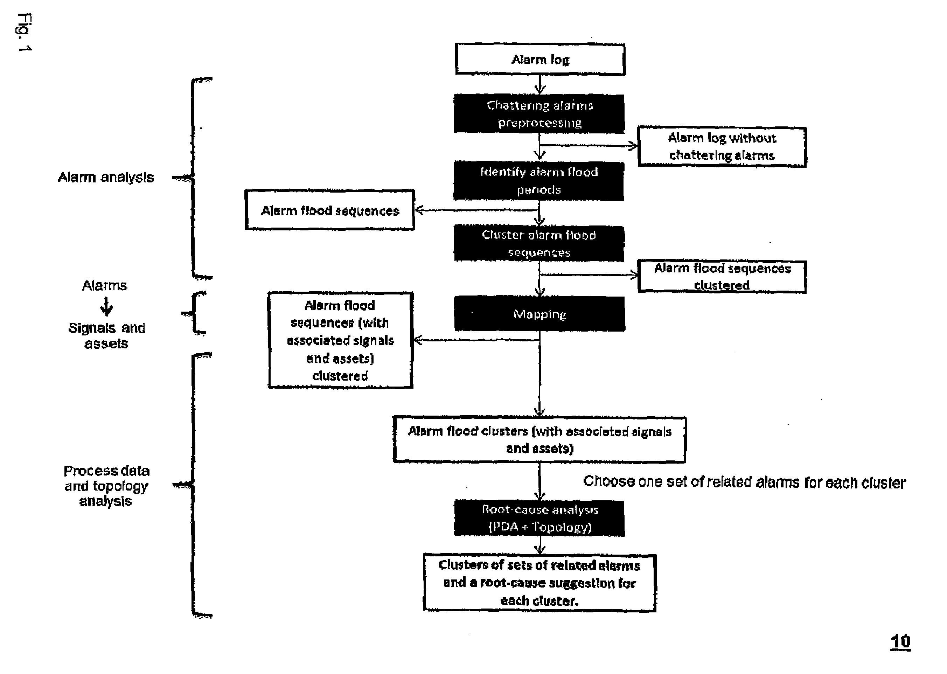

Figure 1 shows an exemplary workflow of the method according to the invention. Assuming that alarm floods are the result of an abnormality propagating in the process through material/energy/control connections and similar alarm flood sequences originates from the same root cause, the proposed approach will reduce alarm floods in process plants by grouping consequential alarms originated from the same root-cause and suggest a first alarm related to the isolated root-cause.

The main steps of the proposed approach are
(1) Data preprocessing (e.g. Remove chattering alarms from the raw alarm sequence),
(2) Identify the alarm flood time intervals and alarm flood sequences in the process alarm log,
(3) Group alarm flood sequences according to their similarity using a suitable metric,
(4) Map alarms to process signals and assets in the process and instrumentation diagram (P&ID) and
(5) Isolate root cause using the collected process data and a suitable process connectivity analysis.

The first three steps correspond to the alarm log analysis stage. In the first step chattering alarms will be removed from the alarm log, in the second the alarm flood periods are isolated and the alarm flood sequences are constructed. In the last step of the alarm analysis, a similarity index between sequences is computed and the alarm sequences are clustered according to it. The forth step is the connection between the alarm identities and the process signals and assets tag names. The last two steps correspond to the process data and connectivity analysis stage. In the fifth step the results obtained from the alarm analysis are refined. Connectivity and signals are used to identify those alarms that are not related to the event causing the flood. Finally, in the fifth step a precedence analysis is performed to isolate the first alarm in the alarm flood sequence.

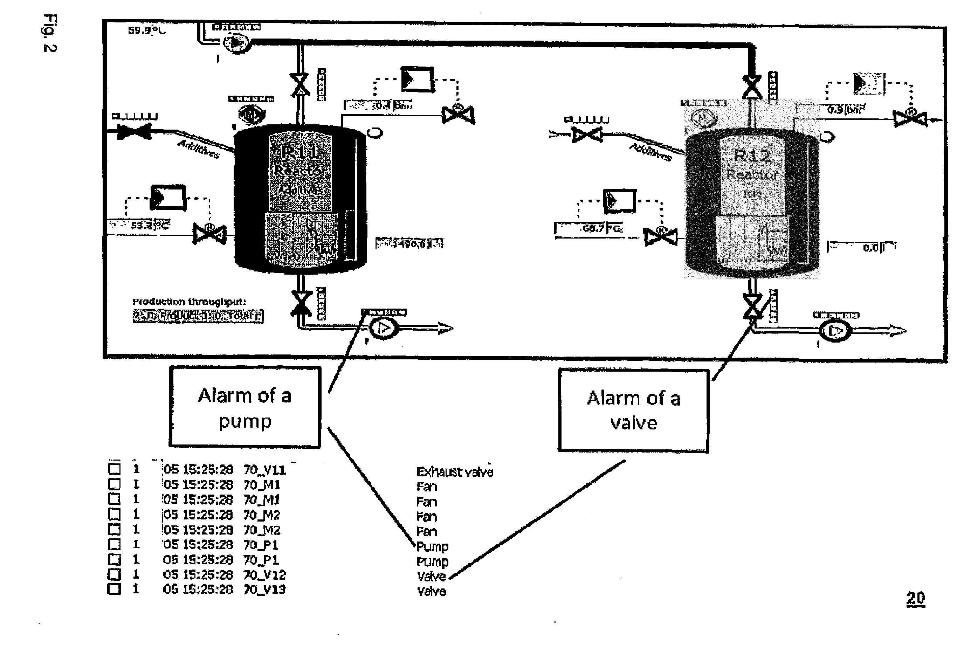

Figure 2 shows alarm visualization as list and in HMI. Alarms are a known methodology to indicate a required action to the operator. E.g. when a tank level reaches a certain limit, a high alarm is raised that shows that the tank reached a high level. According to the equipment that send the alarm and the message text that is shown to the operator in an alarm list, the operator can act accordingly and, for example, open a valve and start a pump to decrease the level inside the tank.

When an alarm appears, it is usually visualized in an alarm list, see Figure 2. Additionally, in some cases the alarm is also visualized in the human machine interface directly at the device, see Figure 2. The operator has now the chance to react on those alarms.

The example in Figure 2 shows that often an alarm is followed by several consequential alarms. In the example in Figure 2 nearly all equipment used to control the two reactors raised alarms, although the pump in the upper left part is the root-cause for the problem.

For that reason, each of the alarms gets a time stamp, that the operator can sort the list accordingly and evaluate which alarm appeared first. When the alarm that appeared first has been found, the problem can be solved.

The drawback of this solution is that the time stamping is often quite inaccurate. There might be a certain time span between the appearance of the alarm and the time stamping. Figure 2 shows that the time stamping of the alarms might not be accurate enough to evaluate, which alarm appeared first. In the example, the nine alarms that are shown in the excerpt of the alarm list have the same time stamp. Thus, the operator cannot use the time stamps to sort the list and find the first-up alarm. For the shown example, the operator needs to evaluate the entire list and search at least through these nine alarms to find the first up alarm and therefore to get a hint for the root-cause of the problem.

Several data driven root cause analysis methods have proven to efficiently and accurately extract the tag closest to the root cause asset from a set of process data measurements (see e.g. [5, 6]). However, to the authors' best knowledge, the reported industrial case studies restrict themselves to the use of a combination of a maximum two types of process data (e.g. process alarm and process connectivity in [4] or process measurement and process connectivity in [2, 3].

The main motivation for the extension of the existent results lies on the fact that each type of process data brings valuable information that can reduce the level of uncertainty of the obtained final diagnosis.

Consider the case of the process alarms and events that detect each single process deviation from a predefined limit. As an alarm system inherently ignores the correlation between alarms combined alarm log analysis with process connectivity information in order to appropriately group related alarms. Although this result is clearly beneficial, the ultimate objective i.e. the isolation of the root cause of the encountered abnormal event still remain unknown as the order in the consequential alarm sequence is blurred by the randomness of alarm time arrival and its strong dependency to the alarm limits setting.

### Reference to prior art

*[1]* Larsson, J. E., B. Öhman, A. Calzada, C. Nihlwing, H. Jokstad, L. I. Kristiansen, J. Kvalem, and M. Lind, "A Revival of the Alarm System: Making the Alarm List Useful During Incidents," "Proceedings of the 5th Topical Meeting on Nuclear Plant Instrumentation, Control, and Human Interface Technology, Albuquerque, New Mexico, 2006*.*
*[2]* Thambirajah, J., Benabbas, L., Bauer, M., and Thornhill, N. F., 2009, Cause and effect analysis in chemical processes utilizing XML, plant connectivity and quantitative process history, Computers & Chemical Engineering, 33, 503-512*.*
*[3]* Yim, S.Y., Ananthakumar, H.G., Benabbas, L., Horch, A., Drath, R., and Thornhill, N.F., 2006, Using process connectivity in plant-wide control loop performance assessment, Computers & Chemical Engineering, 31, 86-99.
*[4]* Schleburg, M., 2011, Reduction of alerts in automated systems based on a combined analysis of CAEX plant models and associated alarm logs, Master's Thesis, lnstitut für Automatisierungstechnik, Helmut-Schmidt-Universität, Hamburg
*[5]* Thornhill, N.F., 2005, Finding the source of nonlinearity in a process with plantwide oscillation, IEEE Transactions on Control SystemTechnology, 13, 434-443*.*
*[6]* Thornhill, N.F., Cox, J.W., and Paulonis, M.A., 2003, Diagnosis of plant-wide oscillation through data-driv en analysis and process understanding, Control Engineering Practice, 11, 1481-1490*.* Y.

### List of reference signs

- 10: exemplary workflow of the method according to the invention
- 20: exemplary alarm visualization as list and in HMI

## Claims

1. Method for Root analysis of an alarm flood sequence, comprising the following steps:
• Providing a flood of alarms in raw alarm sequences,
• Removing chattering alarms from the raw alarm sequences,
• Identifying the alarm flood time intervals and alarm flood sequences,
• Grouping alarm flood sequences according to their similarity using a suitable metric,
• Mapping alarms to process signals and assets in a process and instrumentation diagram,
• Isolate root cause using the collected process data and a suitable process connectivity analysis.
